# FASCICULE DE BREVET EUROPEEN

(11) **EP 1 128 991 B1**
(45) Date de publication et mention de la délivrance du brevet: **16.03.2005**
(21) Numéro de dépôt: 00962646.6
(22) Date de dépôt: 14.09.2000
(51) Int. Cl.: B60R 16/02, H04L 29/06

(54) **SYSTEME DE TELECHARGEMENT DE FICHIERS DE DONNEES DANS PLUSIEURS CALCULATEURS EMBARQUES A BORD D'UN VEHICULE AUTOMOBILE**
SYSTEM ZUR DATEIENFERNÜBERTRAGUNG ZU MEHREREN BORDRECHNERN EINES KRAFTFAHRZEUGES
SYSTEM FOR DOWNLOADING DATA FILES INTO SEVERAL COMPUTERS ON BOARD A MOTOR VEHICLE

(30) Priorité: 15.09.1999 FR 9911531
(43) Date de publication de la demande: 05.09.2001
(73) Titulaire: Peugeot Citroen Automobiles SA, 92200 Neuilly sur Seine (FR)
(72) Inventeur: LOPEZ, Thierry, F-78700 Conflans Ste Honorine France (FR)
(74) Mandataire: Habasque, Etienne Joel Jean-François
(86) Numéro de dépôt international: PCT/FR2000/002553
(87) Numéro de publication internationale: WO 2001/019647

(56) Documents cités:
- US-A- 5 890 086
- US-A- 5 944 804
- LECONTE P: "CAN VA DE L'AUTOMOBILE AUX AUTOMATISMES INDUSTRIELS" MESURES REGULATION AUTOMATISME,FR,CFE. PARIS, vol. 60, no. 685, 1 mai 1996 (1996-05-01), pages 87-88,90, XP000593697 ISSN: 0755-219X
- KIENCKE U ET AL: "OPEN SYSTEMS AND INTERFACES FOR DISTRIBUTED ELECTRONICS IN CARS (OSEK)" SAE TECHNICAL PAPER SERIES,US,SOCIETY OF AUTOMOTIVE ENGINEERS, WARRENDALE, PA, 1995, pages 71-78, XP002062366 ISSN: 0148-7191

## Description

La présente invention concerne un système de téléchargement de fichiers de données dans plusieurs calculateurs embarqués à bord d'un véhicule automobile, à l'aide d'un outil de téléchargement.

On utilise déjà dans l'état de la technique de tels outils de téléchargement soit en ligne de montage, soit en service après-vente, pour assurer le téléchargement de fichiers de données dans des calculateurs embarqués à bord de véhicules automobiles.

Les véhicules automobiles comportent en effet de plus en plus de calculateurs, parmi lesquels on trouve des calculateurs multifonctions de moteur, des calculateurs de boîte de vitesses automatique, des calculateurs de boîtier de servitude intelligent, etc..

Actuellement, les différents calculateurs d'un véhicule peuvent être téléchargés de façon séquentielle, c'est-à-dire que les calculateurs sont téléchargés les uns à la suite des autres. Ainsi le brevet US 5,890,086 décrit le téléchargement d'un programme d'un premier module vers un deuxième module par l'intermédiaire d'un réseau CAN.

On conçoit que ceci présente un certain nombre d'inconvénients, car il y a alors lieu de référencer et d'archiver individuellement dans les systèmes de nomenclature des constructeurs de véhicules, chaque fichier de téléchargement.

De plus, ce type d'opérations prend un temps relativement important.

Enfin, des problèmes de compatibilité de différentes versions des logiciels chargés dans ces calculateurs peuvent également apparaître lors de la mise à jour de l'un de ceux-ci.

En effet, si une nouvelle version de logiciel est développée par exemple, afin de résoudre des problèmes rencontrés lors de la mise en oeuvre de la version initiale du logiciel, il y a lieu de s'assurer que le remplacement de la version initiale par la version corrigée ne pose pas de problème de compatibilité avec les autres logiciels embarqués.

Le but de l'invention est donc de résoudre ces problèmes.

A cet effet, l'invention a pour objet un système de téléchargement de fichiers de données dans plusieurs calculateurs embarqués à bord d'un véhicule automobile, à l'aide d'un outil de téléchargement, caractérisé en ce que l'outil comporte des moyens de formation pour chaque calculateur, de trames de données à partir du fichier correspondant et des moyens d'émission cyclique de trames de données successives, chacune à destination d'un calculateur correspondant.

L'invention sera mieux comprise à la lecture de la description qui va suivre, donnée uniquement à titre d'exemple et faite en se référant aux dessins annexés, sur lesquels :
- la Fig.1 représente un organigramme illustrant le chargement d'une trame de données dans un calculateur;
- la Fig.2 représente un schéma synoptique illustrant la structure d'un système de téléchargement selon l'invention; et
- la Fig.3 représente un organigramme illustrant le fonctionnement de ce système.

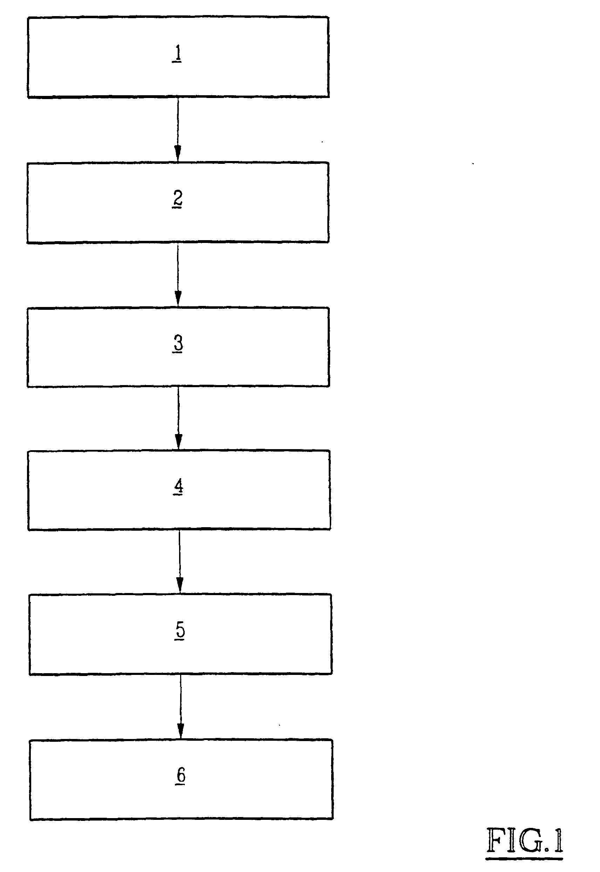

On a représenté sur la figure 1, un organigramme illustrant le téléchargement d'un fichier dans un calculateur.

Lors de ce téléchargement, l'outil de téléchargement charge une trame du fichier à télécharger au cours de l'étape 1.

Ensuite, cette trame est mise en forme pour une exploitation par le calculateur destinataire de cette trame, par ajout à la trame chargée d'un mot de contrôle, etc..., au cours de l'étape 2.

Lors de l'étape 3, cette trame est émise par l'outil de téléchargement à destination du calculateur.

Dans le calculateur, la trame est reçue lors de l'étape 4 et celle-ci est analysée notamment en terme de cohérence de données reçues.

Lors de l'étape 5, cette trame est programmée par le calculateur par exemple dans une mémoire de type FLASH EPROM et le calculateur vérifie la bonne programmation de celle-ci.

Lors de l'étape 6, le calculateur émet une trame de requête vers l'outil de téléchargement pour lui demander la suite du fichier.

Ceci permet alors de revenir vers l'étape 1 de chargement d'une nouvelle trame du fichier à télécharger dans l'outil de téléchargement.

On conçoit que la répétition de ce cycle pour plusieurs fichiers qui doivent être téléchargés dans plusieurs calculateurs de façon séquentielle, prend un temps relativement important.

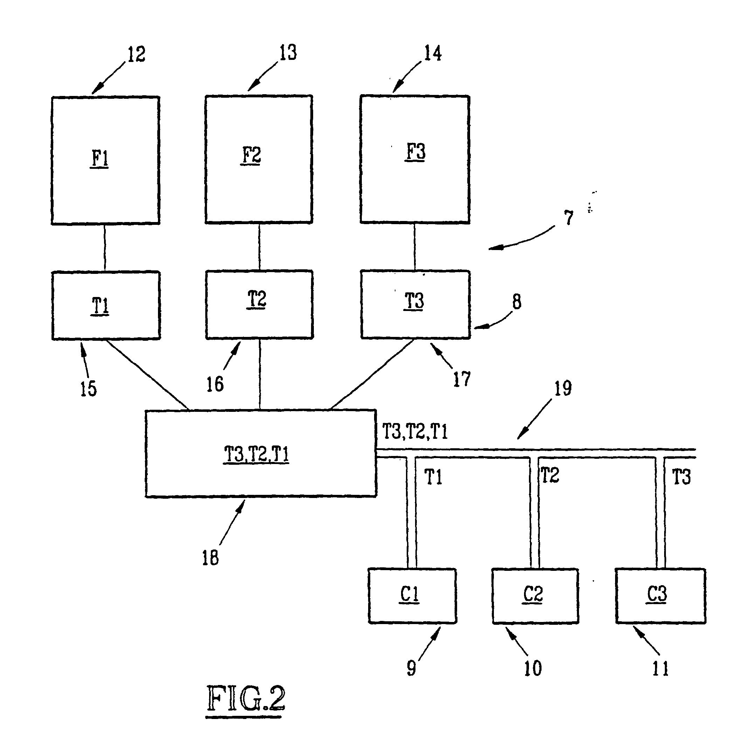

Pour résoudre ces problèmes, dans le système selon l'invention, l'outil de téléchargement désigné par la référence générale 7 sur la figure 2, comporte des moyens désignés par exemple par la référence générale 8, de formation pour former pour chaque calculateur, de trames de données à partir du fichier correspondant.

C'est ainsi par exemple que dans le cas où des données doivent être téléchargées dans trois calculateurs désignés par les références générales 9, 10 et 11, trois fichiers de données correspondants F1, F2 et F3 stockés dans des moyens de mémorisation 12, 13 et 14, permettent à l'outil de téléchargement et plus particulièrement à des moyens 15,16 et 17 respectivement de celui-ci, de former pour chaque calculateur des trames de données, par exemple T1, T2 et T3, à partir du fichier correspondant, par exemple F1, F2 et F3.

L'outil de téléchargement 7 comporte également des moyens 18 d'émission cyclique de trames de données successives, chacune à destination d'un calculateur correspondant.

C'est ainsi par exemple que les trames T1, T2 et T3 sont émises successivement à destination des calculateurs 9, 10 et 11 respectivement, de façon cyclique.

De façon classique, l'outil de téléchargement 7 est relié par un réseau de transmission d'informations 19, à ces calculateurs.

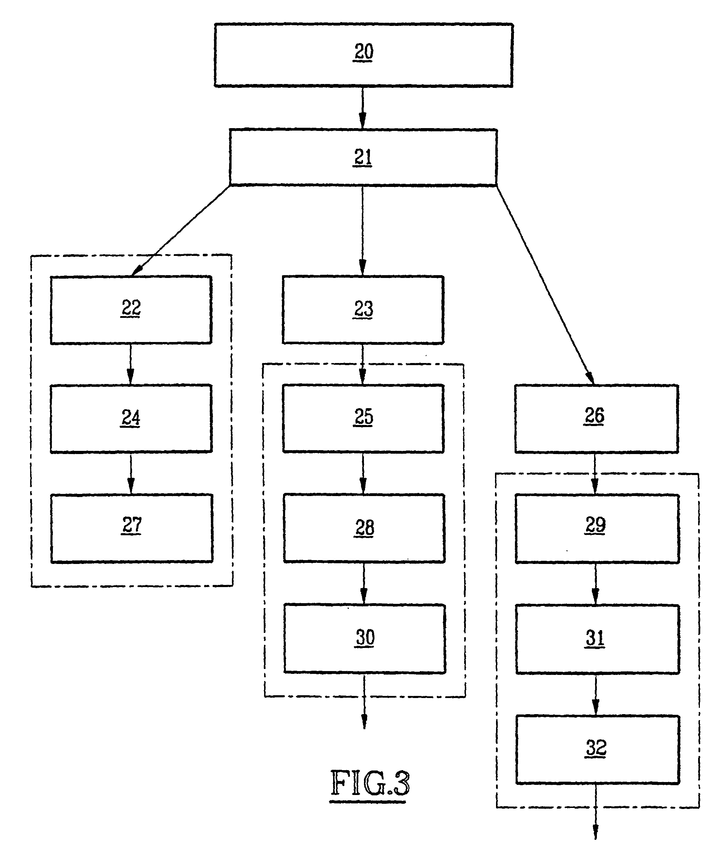

Le fonctionnement de ce système est illustré sur la figure 3.

Lors de l'étape 20, les moyens 15,16 et 17 de l'outil de téléchargement 7 permettent de charger le fichier à télécharger dans chaque calculateur et de former les trames à destination de chacun de ceux-ci.

Lors de l'étape 21, l'outil 7 émet une première trame de données à destination d'un premier calculateur, par exemple 9.

Plusieurs opérations se déroulent ensuite en même temps pour les différents calculateurs embarqués à bord du véhicule.

On conçoit en effet qu'après que cette première trame de données a été émise sur le réseau à destination du premier calculateur, cette première trame est reçue en 22 dans le premier calculateur 9 et est analysée notamment en terme de cohérence de données reçues, pour déterminer si celle-ci a été transmise correctement.

En même temps, les moyens d'émission 18 de l'outil de téléchargement 7 sont disponibles pour émettre en 23, une première trame de données à destination d'un second calculateur 10.

Les deux calculateurs qui ont reçu des trames de données poursuivent alors le traitement de celles-ci au cours d'une étape 24 pour le premier calculateur 9, par la programmation en mémoire par exemple FLASH EPROM des données reçues et en vérifiant la bonne programmation de celle-ci, alors que pendant ce temps, la première trame émise à destination du second calculateur 10 est reçue dans celui-ci et analysée notamment en terme de cohérence lors de l'étape 25.

Pendant ce temps, le réseau de transmission est libre et l'outil de téléchargement 7 peut émettre la première trame à destination du troisième calculateur 11, lors de l'étape 26.

Le processus de traitement des trames se poursuit ensuite dans chacun des calculateurs.

Dans le premier calculateur 9, lors de l'étape 27, celui-ci émet une trame de requête à destination de l'outil pour lui demander la transmission de la suite du fichier correspondant.

Pendant ce temps, le deuxième calculateur 10 assure la programmation en mémoire de type FLASH EPROM des données qu'il a reçues et vérifie la bonne programmation de cette mémoire, lors de l'étape 28.

En même temps, la trame correspondante est reçue dans le troisième calculateur 11 et est analysée notamment en terme de cohérence lors de l'étape 29.

Ensuite, le deuxième calculateur 10 termine son processus de traitement de la trame en émettant à destination de l'outil de téléchargement, une trame de requête de transmission de la suite du fichier, lors de l'étape 30, tandis que pendant ce temps, le troisième calculateur 11 assure la programmation en mémoire des données reçues et vérifie; sa bonne programmation lors de l'étape 31, avant d'émettre en 32, une trame de requête de la poursuite de la transmission.

On conçoit alors que ce système permet de créer un fichier unique pour les différents calculateurs embarqués à bord du véhicule automobile, structurés de manière que les trames à destination des différents calculateurs soient émises successivement de façon à accélérer le téléchargement de l'ensemble des fichiers dans ces différents calculateurs.

En effet, l'émission successive des trames à destination des différents calculateurs permet de faire fonctionner ceux-ci en parallèle, mais de façon décalée dans le temps, ce qui permet de réduire de façon très importante le temps de téléchargement de l'ensemble des fichiers dans ceux-ci.

Il va de soi bien entendu que différents modes de réalisation de ce système peuvent être envisagés et qu'un nombre différent de calculateurs peut être téléchargé de cette façon.

De même, les trames téléchargées dans les calculateurs peuvent comporter des trames de données, des trames d'entête, des trames d'identification, etc..

On conçoit alors que la structure de ce système permet d'entrelacer les trames de données de façon à masquer le temps nécessaire à la programmation des données reçues et à la vérification de la bonne programmation effectuée par un calculateur, par la transmission d'une autre trame de données à destination d'un autre calculateur, de telle sorte que l'on ne cumule pas les temps de chacun de ces calculateurs, pour assurer la programmation globale de l'ensemble.

En effet, pendant que l'un des calculateurs est occupé à programmer en mémoire une trame reçue, on permet à l'outil de téléchargement de transmettre une trame à destination d'un autre calculateur et ainsi de suite.

## Revendications

1. Système de téléchargement de fichiers de données dans plusieurs calculateurs embarqués à bord d'un véhicule automobile, à l'aide d'un outil de téléchargement, comportant des moyens (8) de formation pour chaque calculateur (9,10,11), de trames (T1,T2,T3) de données à partir du fichier correspondant (F1,F2,F3), et **caractérisé en ce que** ledit outil comporte en outre des moyens (18) d'émission cyclique de trames de données successives, chacune à destination d'un calculateur correspondant (9,10,11) de façon à masquer le temps nécessaire à la programmation des données reçues et à la vérification de la bonne programmation effectuée par un de ces calculateurs (9,10,11) par la transmission d'une autre trame de données à destinations d'un autre de ces calculateurs (9,10,11).

2. Système selon la revendication 1, **caractérisé en ce que** l'outil de téléchargement (7) est raccordé au calculateur par un réseau de transmission d'informations (19).

3. Système selon la revendication 1 ou 2, **caractérisé en ce que** chaque calculateur (9,10,11) est associé à une mémoire de type flash EPROM de stockage des trames de données correspondantes.

## Patentansprüche

1. System für das Femladen von Dateien in mehrere Rechner an Bord eines Kraftfahrzeugs mithilfe einer Vorrichtung zum Femladen, mit Mitteln (8), um für jeden Rechner (9, 10, 11) Datenframes (T1, T2, T3) anhand der entsprechenden Datei (F1, F2, F3) zu erstellen, **dadurch gekennzeichnet, dass** die genannte Vorrichtung darüber hinaus Mittel (18) für das zyklische Absenden von aufeinanderfolgenden Datenframes beinhaltet, die jeweils für einen entsprechenden Rechner (9, 10, 11) bestimmt sind, um die notwendige Zeit für die Programmierung der erhaltenen Daten und für die Überprüfung der richtigen Programmierung durch einen dieser Rechner (9, 10, 11) durch die Übertragung eines anderen Datenframes, der für einen anderen dieser Rechner (9, 10, 11) bestimmt ist, zu maskieren.

2. System gemäß Patentanspruch 1, **dadurch gekennzeichnet, dass** die Vorrichtung zum Femladen (7) anhand eines Informationsübertragungsnetzes (19) an den Rechner angeschlossen ist.

3. System gemäß Patentanspruch 1 oder 2, **dadurch gekennzeichnet, dass** jeder Rechner (9, 10, 11) einem Flash-Speicher vom Typ EPROM für das Speichern der entsprechenden Datenframes zugeordnet ist.

## Claims

1. System for downloading data files into a plurality of on-board computers in a motor vehicle, using a downloading tool, comprising means (8) for each computer (9, 10, 11) to format data frames (T1, T2, T3) from the corresponding file (F1, F2, F3), **characterised in that** said tool further comprises means (18) for cyclically sending successive data frames, each destined for a corresponding computer (9, 10, 11), so as to cover the time needed to programme the data received and to check that it has been satisfactorily programmed by one of these computers (9, 10, 11) by sending another data frame destined for another of these computers (9, 10, 11).

2. System according to claim 1, **characterised in that** the downloading tool (7) is connected to the computer by a data transmission network (19).

3. System according to claim 1 or 2, **characterised in that** each computer (9, 10, 11) is associated with a flash EPROM-type memory for storing the corresponding data frames.
